# EUROPEAN PATENT SPECIFICATION

(11) **EP 2 848 127 B1**
(45) Date of publication and mention of the grant of the patent: **04.11.2020**
(21) Application number: 13788604.0
(22) Date of filing: 23.04.2013
(51) Int. Cl.: A23D 9/013, A23D 9/02, A23G 1/36, C11B 3/10, C11B 3/14, C11C 3/10, C11B 7/00, C11B 3/00, A23G 1/38, A23D 9/00

(54) **OIL AND FAT COMPOSITION SUITABLE FOR NON-TEMPERING HARD BUTTER**
ÖL- UND FETTZUSAMMENSETZUNG FÜR UNGETEMPERTE HARTBUTTER
COMPOSITION D'HUILE ET DE GRAISSE ADAPTÉE À LA CONFECTION D'UN BEURRE DUR NON TEMPÉRÉ

(30) Priority: 10.05.2012 JP 2012108301
(43) Date of publication of application: 18.03.2015
(73) Proprietor: The Nisshin OilliO Group, Ltd., Tokyo 104-8285 (JP)
(72) Inventor: UEHARA, Hidetaka, Yokosuka-shi Kanagawa 239-0832 (JP); OONISHI, Kiyomi, Yokosuka-shi Kanagawa 239-0832 (JP); SUGANUMA, Tomomi, Yokosuka-shi Kanagawa 239-0832 (JP); TSUKIYAMA, Muneo, Yokosuka-shi Kanagawa 239-0832 (JP); OHARA, Atsushi, Tokyo 104-8285 (JP)
(74) Representative: Müller-Boré & Partner Patentanwälte PartG mbB
(86) International application number: PCT/JP2013/061929
(87) International publication number: WO 2013/168554

(56) References cited:
- EP-A1- 1 491 097
- EP-A1- 2 710 898
- WO-A1-03/080779
- WO-A1-2012/002373
- WO-A1-2012/002373
- JP-A- H07 303 448
- JP-A- 2007 504 802
- JP-A- 2009 284 899
- US-A1- 2006 105 090
- Anonymous: "National Sunflower Association : What is High Oleic Sunflower Oil", , 20 November 2015 (2015-11-20), XP055229867, Retrieved from the Internet: URL:http://www.sunflowernsa.com/oil/what-i s-high-oleic-sunflower-oil/ [retrieved on 2015-11-20]
- M LIPP ET AL: "Review of cocoa butter and alternative fats for use in chocolate-Part B. Analytical approaches for identification and determination", FOOD CHEMISTRY, vol. 62, no. 1, 1 May 1998 (1998-05-01), pages 99-108, XP055229868, NL ISSN: 0308-8146, DOI: 10.1016/S0308-8146(97)00161-1

## Description

The present invention relates to an oil and fat composition suitable for non-tempering type hard butter that is a low trans fatty acid and non-lauric type and an oil-based food product comprising said oil and fat composition.

Oil-based food products including chocolates are usually solid under storage environments and are characterized by readily melting in the mouth. These chocolates that are solid in the storage environment are often molded using a mold. Because of this, it is important for the chocolate to be rapidly solidified in the mold and to be, once solidified, promptly released from the mold. Thus, from an aspect of the productivity, the chocolate is required to have a property of good mold-releasing (mold separation). The property of these chocolates is mainly affected by an oil and fat blended therein.

The oil and fat that is most suitable for chocolates is cacao butter. However, because the cacao butter is expensive, cacao butter substitutes prepared from another vegetable oil and fat are often used for the oil and fat in chocolates as well. The cacao butter substitute used as the oil and fat in chocolates is also referred to as hard butter. The hard butter is in general classified into a tempering type and non-tempering type.

Tempering type hard butter contains, as a major component, a symmetric triglyceride which is contained in the cacao butter in a large amount. Hence, it is easy to substitute the tempering type hard butter for the cacao butter and the tempering type hard butter can be mixed to use with the cacao butter in any blending formulation. Further, the tempering type hard butter exhibits sharp melting feeling in the mouth. And when chocolates were produced by use of this tempering type hard butter, tempering is, as in the case of cacao butter, required to be carried out.

On the other hand, the non-tempering type hard butter has melting properties similar to those of the cacao butter but has completely different oils and fats structure. Hence, the non-tempering type hard butter is poorly compatible with the cacao butter. However, the non-tempering type hard butter is cheaper pricewise, as compared with the cacao butter, and does not require cumbersome tempering, which provides ease of handling. Thus, the non-tempering type hard butter is widely used in chocolates of the field of confectionery production·bread making. The non-tempering type hard butter is roughly divided into a lauric acid type and non-lauric type.

Among the non-tempering type hard butter, lauric acid type hard butter contains lauric acid as a major constituent fatty acid. Typically, one obtained by hydrogenating a high melting point fraction (palm kernel stearin) to extremely hydrogenate, which high melting point fraction is obtained by fractionating palm kernel oil, is known. The melting properties of this kind of hard butter are extremely sharp. Yet, because the compatibility thereof with cacao butter is extremely poor, the blending ratio of the cacao butter needs to be set to as low as possible. Hence, chocolates in which the lauric acid type hard butter is used are poor in cocoa flavor. In addition, there is a problem in that, when used in confectionery or bread containing a relatively high amount of water, chocolates in which the lauric acid type hard butter is used generate soap smell if storage conditions are poor.

Among the non-tempering type hard butter, non-lauric type hard butter is also referred to as trans acid type hard butter. Typically, known is non-lauric type hard butter obtained by subjecting low melting point palm olein or liquid oil such as soy bean oil to isomerization and hydrogenation; and a high melting point fraction or intermediate melting point fraction obtained by, as necessary, further fractionating the one that has been subjected to the isomerization hydrogenation. The melting properties of non-lauric type hard butter lacks sharpness slightly, as compared with the lauric acid type, whereas the compatibility thereof with the cacao butter is better than that of the lauric acid type and thus more cacao butter can be blended, as compared with the case of the lauric acid type. However, because the non-lauric type hard butter contains a large amount of trans fatty acids, used thereof has been avoided since adverse health effects of the trans fatty acids came to be recognized.

Due to these kinds of the circumstances, the reduction of the trans fatty acids in the non-lauric type hard butter is sought.

As non-lauric type hard butter in which trans fatty acids are reduced, hard butter obtained by mixing, at a specific ration, an oil and fat obtained by slightly partially-hydrogenating an oil and fat containing a specific amount of SUS type triglyceride and an oil and fat containing a specific amount of SSU type triglyceride (see Patent Document 1) and hard butter in which an oil and fat obtained by slightly partially-hydrogenating specific transesterified oil is blended in a specific amount (see Patent Document 2) are known. In these hard butter, the trans fatty acids are reduced to some extent, as compared with conventional trans acid type hard butter. Yet, it could not be said that the reduction was sufficient.

In addition, it has been known that trans fatty acids contained in the trans acid type hard butter are associated with chocolate's mold-releasing property. Thus, a decrease in the trans fatty acid in the hard butter affects chocolate's mold-releasing property and thereby the productivity falls at the time of chocolate production, which has been problematic.

From the above, development of non-tempering type hard butter that is a low trans fatty acid and non-lauric type is demanded, which non-tempering type hard butter is capable of producing oil-based food products such as chocolates, the productivity of which is good.

Patent Document 1: WO 05/094598
Patent Document 2: Japanese Translated PCT Patent Application Laid-open No. 2007-504802
Patent Document 3: WO 2012/002373 A1 describes non-lauric, non-trans and non-tempering type confectionery oil or fat and process for production thereof.
Patent Document 4: EP 2 710 898 A1 describes oil or fat composition which can be used as non-tempered hard butter.

An object of the present invention is to provide an oil and fat composition suitable for non-tempering type hard butter that is a low trans fatty acid and non-lauric type and an oil-based food product comprising said oil and fat composition, the productivity of which is good.

In order to solve the above problem, the present inventors have intensively studied to find out that, by using an oil and fat composition containing diglyceride and a specific triglyceride in a specific amount as non-tempering type hard butter, an oil-based food product, the productivity of which is good, could be obtained in spite of the non-tempering type hard butter being a low trans fatty acid and non-lauric type, thereby completing the present invention.

That is, a first embodiment of the present invention is an oil and fat composition satisfying the following conditions of (a) to (d):
(a) an X3 content is 1 to 20% by weight;
(b) an X2O content is 50 to 90% by weight;
(c) a weight ratio of XOX/X20 is 0.20 to 0.80; and
(d) a diglyceride content is 0.2% to 3.5% by weight;
(in the above conditions of (a) to (d), each of X, O, X3, X2O, and XOX represents the following:
X: saturated fatty acid having 14 carbon atoms or more;
O: oleic acid;
X3: triglyceride in which three molecules of X are bound;
X2O: triglyceride in which two molecules of X and one molecule of O are bound;
XOX: triglyceride in which X is bound at positions 1 and 3 and O is bound at position 2).

A second embodiment of the present invention is the oil and fat composition of the first embodiment, wherein the lauric acid content in the constituent fatty acids is not more than 5% by weight and the trans fatty acid content is not more than 5% by weight.

A third embodiment of the present invention is the oil and fat composition of the first embodiment or the second embodiment, wherein the above-mentioned oil and fat composition is non-tempering type hard butter.

According to the present invention, an oil and fat composition suitable for non-tempering type hard butter that is a low trans fatty acid and non-lauric type and an oil-based food product comprising said oil and fat composition, the productivity of which is good, can be provided.

The oil and fat composition of the present invention is one satisfying the following conditions of (a) to (d):
(a) an X3 content is 1 to 20% by weight;
(b) an X2O content is 50 to 90% by weight;
(c) a weight ratio of XOX/X2O is 0.20 to 0.80; and
(d) a diglyceride content is 0.2% to 3.5% by weight.

In the oil and fat composition of the present invention, the X3 content (the condition (a)) is 1 to 20% by weight, preferably 7 to 18% by weight, and more preferably 9 to 16% by weight. If the X3 content is within the above-mentioned range, the productivity of the oil-based food product comes to be good.

It is to be noted that, in the present invention, X3 is a triglyceride in which three molecules of Xs are bound (XXX). Further, the triglyceride refers to a triacylglycerol in which three molecules of fatty acids are bound to glycerol. Further, in the present invention, X is a saturated fatty acid having 14 carbon atoms or more and preferably a saturated fatty acid having 14 to 20 atoms.

In the oil and fat composition of the present invention, the X2O content (the condition (b)) is 50 to 90% by weight, preferably 55 to 75% by weight, and more preferably 60 to 75% by weight. If the X2O content is within the above-mentioned range, the productivity of the oil-based food product comes to be good.

It is to be noted that, in the present invention, X2O is a triglyceride in which 2 molecules of Xs and 1 molecule of O are bound (XXO+XOX+OXX). Further, in the present invention, O is oleic acid (monovalent unsaturated fatty acid having 18 carbon atoms).

In the oil and fat composition of the present invention, the weight ratio of XOX/X2O (the condition (c)) is 0.20 to 0.80, preferably 0.25 to 0.50, and more preferably 0.28 to 0.43. If the weight ratio of XOX/X2O is within the above-mentioned range, the oil and fat composition comes to be suitable for non-tempering type hard butter.

It is to be noted that, in the present invention, the weight ratio of XOX/X2O refers to a ratio of XOX content (% by weight) to X2O content (% by weight). Further, in the present invention, XOX is a triglyceride in which X is bound at positions 1 and 3, and O is bound at position 2.

In the oil and fat composition of the present invention, the diglyceride content (the condition (d)) is 0.2% to 3.5% by weight, preferably not more than 3% by weight, more preferably not more than 2% by weight, still more preferably not more than 1.7% by weight, and most preferably not more than 1% by weight. If the diglyceride content is within the above-mentioned range, the productivity of the oil-based food product comes to be good. In addition, if the diglyceride content is within the above-mentioned range, the oil-based food product comes to exhibit less seepage of oil and fat and have a better heat resistance and melting feeling in the mouth.

It is to be noted that diglyceride refers to diacyl glycerol in which two molecules of fatty acids are bound to glycerol. Further, in the present invention, diglyceride may be referred as DAG.

In the oil and fat composition of the present invention, the lauric acid content in constituent fatty acids is preferably not more than 5% by weight, more preferably not more than 2% by weight, and still more preferably not more than 1% by weight. With the lauric acid content being the above-mentioned range, the oil and fat composition is suitable for non-tempering type hard butter that is non-lauric type. Note that, in the present invention, lauric acid (saturated fatty acid having 12 carbon atoms) is in some cases described also as La.

In the oil and fat composition of the present invention, the trans fatty acid content in constituent fatty acids is preferably not more than 5% by weight, more preferably not more than 3% by weight, and still more preferably not more than 1% by weight. With the trans acid content being the above-mentioned range, the oil and fat composition is suitable for non-tempering type hard butter that has a low trans fatty acid content. Note that, in the present invention, trans fatty acids are in some cases described also as TFAs.

In the oil and fat composition of the present invention, the weight ratio of P3/X3 is preferably not less than 0.35, more preferably not less than 0.50, and still more preferably 0.50 to 0.70. If the weight ratio of P3/X3 is within the above-mentioned range, the oil-based food product comes to have a better heat resistance and melting feeling in the mouth.

It is to be noted that, in the present invention, P3 is a triglyceride in which three molecules of Ps are bound (PPP). Further, in the present invention, the weight ratio of P3/X3 refers to a ratio of P3 content (% by weight) to X3 content (% by weight). Further, in the present invention, P is palmitic acid (saturated fatty acid having 16 carbon atoms).

In the oil and fat composition of the present invention, the weight ratio of PStO/X2O is preferably 0.10 to 0.60, more preferably 0.20 to 0.35, and still more preferably 0.23 to 0.33. If the weight ratio of PStO/X2O is within the above-mentioned range, the oil-based food product comes to have a better heat resistance and melting feeling in the mouth.

It is to be noted that, in the present invention, PStO is a triglyceride in which 1 molecule of P, 1 molecule of St, and 1 molecule of O are bound (PStO+POSt+StPO+StOP+OPSt+OStP). Further, in the present invention, the weight ratio of PStO/X2O refers to a ratio of PStO content (% by weight) to X2O content (% by weight). Further, in the present invention, St is stearic acid (saturated fatty acid having 18 carbon atoms).

In the oil and fat composition of the present invention, the weight ratio of St2O/X2O is preferably 0.02 to 0.35, more preferably 0.07 to 0.25, and still more preferably 0.10 to 0.23. If the weight ratio of St2O/X2O is within the above-mentioned range, the oil-based food product comes to have a better heat resistance and melting feeling in the mouth.

It is to be noted that, in the present invention, St2O is a triglyceride in which 2 molecules of St and 1 molecule of O are bound (StStO+StOSt+OStSt). Further, in the present invention, the weight ratio of St2O/X2O refers to a ratio of St2O content (% by weight) to X2O content (% by weight).

In the oil and fat composition of the present invention, the weight ratio of St/P is preferably not more than 1.50, more preferably not more than 0.80, and still more preferably 0.35 to 0.55. If the weight ratio of St/P is within the above-mentioned range, the oil-based food product comes to have a better heat resistance and melting feeling in the mouth.

It is to be noted that, in the present invention, the weight ratio of St/P is a ratio of stearic acid content (% by weight) in the constituent fatty acids to palmitic acid content (% by weight) in the constituent fatty acids.

In the oil and fat composition of the present invention, the P3 content is preferably 2 to 20% by weight, more preferably 4 to 15% by weight, and still more preferably 5 to 10% by weight.

In the oil and fat composition of the present invention, the XOX content is preferably not more than 50% by weight, more preferably 10 to 35% by weight, and still more preferably 15 to 30% by weight.

In the oil and fat composition of the present invention, the P2O content is preferably 20 to 55% by weight, more preferably 25 to 45% by weight, and still more preferably 30 to 40% by weight. Note that, in the present invention, P2O is a triglyceride in which 2 molecules of P and 1 molecule of O (PPO+POP+OPP).

In the oil and fat composition of the present invention, the PStO content is preferably 8 to 30% by weight, more preferably 10 to 28% by weight, and still more preferably 12 to 25% by weight.

In the oil and fat composition of the present invention, the St2O content is preferably 1 to 20% by weight, more preferably 5 to 18% by weight, and still more preferably 5 to 15% by weight.

In the oil and fat composition of the present invention, the palmitic acid content in the constituent fatty acids is preferably 35 to 60% by weight, more preferably 37 to 53% by weight, and still more preferably 40 to 50% by weight.

In the oil and fat composition of the present invention, the stearic acid content in the constituent fatty acids is preferably 5 to 30% by weight, more preferably 12 to 28% by weight, and still more preferably 15 to 25% by weight.

In the oil and fat composition of the present invention, the content of fatty acids having 16 carbon atoms or more (preferably fatty acids having 16 to 24 carbon atoms) is preferably not less than 95% by weight, more preferably not less than 97% by weight, and still more preferably not less than 98% by weight. It is to be noted that, in the present invention, fatty acids having 16 carbon atoms or more are in some cases described also as FAs with C16 or more.

In the oil and fat composition of the present embodiment, the solid fat content (hereinafter referred to as SFC) is preferably 40 to 95% at 25°C, 15 to 70% at 30°C, and 5 to 35% at 35°C; more preferably 45 to 90% at 25°C, 20 to 65% at 30°C, and 7 to 30% at 35°C; and still more preferably 50 to 70% at 25°C, 25 to 40% at 30°C, and 8 to 20% at 35°C.

A fatty acid content and trans fatty acid content can be measured in accordance with AOCS Ce1f-96.

An X3 triglyceride content, P3 triglyceride content, X2O triglyceride content, P2O triglyceride content, St2O triglyceride content, and PStO triglyceride content can be measured in accordance with JAOCS. vol.70, 11, 1111-1114 (1993).

An XOX triglyceride content can be calculated based on an XOX/X2O ratio and X2O triglyceride content, wherein the value of XOX/X2O ratio is measured by a method in accordance with J. High Resol. Chromatogr., 18, 105-107 (1995).

A diglyceride content can be measured by gas chromatography using an external standard method, wherein diglycerides are concentrated by a solid phase extraction method and then subjected to trimethylsilylation.

The iodine value can be measured in accordance with "2.3.4.1-1996 iodine value (Wijs-cyclohexane method)" in "Standard Methods for Analysis of Fats, Oils and Related Materials (edited by incorporated association Japan Oil Chemists' Society)".

SFC was completely dissolved and then solidified at 10°C for 60 minutes, followed by further aging at 20°C for three days; and the resulting oil and fat was measured by a method in accordance with IUPAC method 2.150b-S Solid Content determination in Fats by NMR.

To the oil and fat composition of the present invention, components other than the oil and fat such as additives can be added. Concrete examples of the additive include, emulsifiers (lecithin, lysolecithin, sorbitan esters of fatty acids, polyglycerin esters of fatty acids, sucrose esters of fatty acids, polyoxyethylenesorbitan esters of fatty acids, polyglycerol polyricinoleate, glycerol esters of fatty acids (monoglyceride), glycerin organic acid esters of fatty acids, propylene glycol esters of fatty acids, or the like), antioxidants such as tocopherol, tea extracts (catechin or the like), rutin, and flavoring agents. In the oil and fat composition of the present invention, the content of components other than the oil and fat is preferably not more than 5% by weight, more preferably not more than 3% by weight, and still more preferably not more than 1% by weight.

The oil and fat composition of the present invention is not particularly restricted as long as the composition of triglycerides, the composition of diglycerides, the composition of constituent fatty acids and the like are within the above-mentioned, and can be produced by using an usual edible oil and fat. The oil and fat composition of the present invention can be produced by, for example, mixing the following transesterified oil A and the following transesterified oil B to obtain mixed oil and removing a high melting point fraction and low melting point fraction by fractionating such mixed oil to obtain an intermediate melting point fraction.

The transesterified oil A used in the present invention is an oil and fat obtained by subjecting a raw material oil and fat to a random transesterification reaction, wherein the diglyceride content is not more than 10.0% by weight, the palmitic acid content in the constituent fatty acids is 15 to 70% by weight, the stearic acid content in the constituent fatty acids is 10 to 55% by weight, the oleic acid content in the constituent fatty acids is 10 to 40% by weight, and the total content of linoleic acid (divalent unsaturated fatty acid having 18 carbon atoms) and linolenic acid (trivalent unsaturated fatty acid having 18 carbon atoms) in the constituent fatty acids is less than 10% by weight.

With regard to the raw material oil and fat of the transesterified oil A used in the present invention, the diglyceride content is not more than 10.0% by weight, the palmitic acid content in the constituent fatty acids is 15 to 70% by weight, the stearic acid content in the constituent fatty acids is 10 to 55% by weight, the oleic acid content in the constituent fatty acids is 10 to 40% by weight, and the total content of linoleic acid and linolenic acid in the constituent fatty acids is less than 10% by weight; preferably the diglyceride content is not more than 5.0% by weight, the lauric acid content in the constituent fatty acids is less than 3% by weight, the palmitic acid content in the constituent fatty acids is 17 to 45% by weight, the stearic acid content in the constituent fatty acids is 32 to 53% by weight, the oleic acid content in the constituent fatty acids is 17 to 33% by weight, and the total content of linoleic acid and linolenic acid in the constituent fatty acids is less than 8% by weight; and more preferably the diglyceride content is 0.5 to 2.5% by weight, the lauric acid content in the constituent fatty acids is less than 1% by weight, the palmitic acid content in the constituent fatty acids is 20 to 30% by weight, the stearic acid content in the constituent fatty acids is 35 to 50% by weight, the oleic acid content in the constituent fatty acids is 20 to 30% by weight, and the total content of linoleic acid and linolenic acid in the constituent fatty acids is less than 6% by weight.

Concrete examples of the raw material oil and fat of the transesterified oil A used in the present invention include mixed oil containing an oil and fat having a total content of linoleic acid and linolenic acid of less than 10% by weight, palm oil, palm fractionated oil having an iodine value of 25 to 48, and an oil and fat having an iodine value of not more than 5 and having the content of saturated fatty acid having 16 carbon atoms or more of not less than 90% by weight.

In the oil and fat having an total content of linoleic acid and linolenic acid of less than 10% by weight, the oleic acid content is preferably not less than 50% by weight. Concrete examples of the oil and fat having an total content of linoleic acid and linolenic acid of less than 10% by weight include high oleic sunflower oil.

Palm fractionated oil is an oil and fat obtained by fractionating palm oil. An oil and fat obtained by fractionating the palm fractionated oil is also palm fractionated oil. Concrete examples of palm fractionated oil having an iodine value of 25 to 48 include palm stearin (a high melting point fraction obtained by fractionating palm oil), palm mid-fraction (a high melting point fraction obtained by further fractionating a low melting point fraction obtained by fractionating palm oil), and hard PMF (a high melting point fraction obtained by further fractionating a palm mid-fraction). The iodine value of palm fractionated oil having an iodine value of 25 to 48 is preferably 28 to 40 and more preferably 30 to 40.

Concrete examples of an oil and fat having an iodine value of not more than 5 and having the content of saturated fatty acid having 16 carbon atoms or more of not less than 90% by weight include extremely hydrogenated oils of soy bean oil, canola oil, cotton seed oil, sunflower oil, safflower oil, corn oil, palm oil, palm fractionated oil, and the like.

The transesterified oil B used in the present invention is an oil and fat obtained by subjecting a raw material oil and fat to a random transesterification reaction, wherein, the diglyceride content is not more than 10.0% by weight, the palmitic acid content in the constituent fatty acids is 40 to 60% by weight, the stearic acid content in the constituent fatty acids is less than 15% by weight, the oleic acid content in the constituent fatty acids is 20 to 45% by weight, and the total content of linoleic acid and linolenic acid in the constituent fatty acids is less than 15% by weight.

With regard to the raw material oil and fat of the transesterified oil B used in the present invention, the diglyceride content is not more than 10.0% by weight, the palmitic acid content in the constituent fatty acids is 40 to 60% by weight, the stearic acid content in the constituent fatty acids is less than 15% by weight, the oleic acid content in the constituent fatty acids is 20 to 45% by weight, and the total content of linoleic acid and linolenic acid in the constituent fatty acids is less than 15% by weight; preferably the diglyceride content is not more than 7.0 % by weight, the lauric acid content in the constituent fatty acids is less than 3% by weight, the palmitic acid content in the constituent fatty acids is 43 to 57% by weight, the stearic acid content in the constituent fatty acids is less than 10% by weight, the oleic acid content in the constituent fatty acids is 23 to 42% by weight, and the total content of linoleic acid and linolenic acid in the constituent fatty acids is less than 12% by weight; and still more preferably the diglyceride content is 1.0 to 5.0 % by weight, the lauric acid contents in the constituent fatty acids less than 1% by weight, the palmitic acid content in the constituent fatty acids is 47 to 55% by weight, the stearic acid content in the constituent fatty acids is less than 8% by weight, the oleic acid content in the constituent fatty acids is 25 to 40% by weight, the total content of linoleic acid and linolenic acid in the constituent fatty acids is less than 10% by weight.

Concrete examples of the raw material oil and fat of the transesterified oil B used in the present invention include mixed oil containing palm fractionated oil having an iodine value of 25 to 48 and palm oil or the like. The palm fractionated oil having an iodine value of 25 to 48 is as described above.

A transesterification reaction for obtaining the transesterified oil A and transesterified oil B used in the present invention is not particularly restricted as long as it is a random transesterification reaction (referred to also as a non-selective transesterification reaction or transesterification reaction with low regiospecifisity), and can be carried out by a usual method. The random transesterification reaction can be carried out by a method of either chemical transesterification with a synthetic catalyst such as sodium methoxide being used or enzymatic transesterification with lipase (lipase with low regiospecifisity) being used as a catalyst.

The chemical transesterification reaction can be carried out by, for example, drying raw material oils and fats sufficiently, adding sodium methoxide in 0.1 to 1% by weight based on the raw material oil and fat, and then subjecting the resultant to a reaction with stirring under reduced pressure at 80 to 120°C for 0.5 to 1 hour.

The enzymatic transesterification can be carried out by, for example, adding lipase powder or immobilized lipase 0.02 to 10% by weight, preferably 0.04 to 5% by weight based on the raw material oil and fat and then subjecting the resultant to a reaction with stirring at 40 to 80°C and preferably at 40 to 70°C for 0.5 to 48 hours and preferably for 0.5 to 24 hours.

With regard to mixed oil of the transesterified oil A and transesterified oil B for obtaining the oil and fat composition of the present invention, the weight ratio (transesterified oil A: transesterified oil B) is preferably 30:70 to 50:50, more preferably 33:67 to 47:53, and still more preferably 35:65 to 45:55. The mixing can be carried out by a usual method.

The oil and fat composition of the present invention can be produced by fractionating mixed oil of the transesterified oil A and transesterified oil B to remove a high melting point fraction and thereby obtain a low melting point fraction and further fractionating the obtained low melting point fraction to remove a low melting point fraction and thereby obtain a high melting point fraction. That is, the oil and fat composition of the present invention can be produced by fractionating mixed oil of the transesterified oil A and transesterified oil B to obtain an intermediate melting point fraction of the mixed oil of the transesterified oil A and transesterified oil B. Note that, in the present invention, the intermediate melting point fraction of the mixed oil of the transesterified oil A and transesterified oil B is in some cases described also as EBMF.

The oil and fat composition of the present invention can also be produced by mixing EBMF and palm-based oil and fat. The mixing can be carried out a usual method.

In the present invention, palm-based oil and fat refers to palm oil, palm fractionated oil, palm transesterified oil, palm extremely hydrogenated oil, or the like.

The palm fractionated oil is preferably a palm fractionated oil with an iodine value of 10 to 70 and more preferably a palm fractionated oil with an iodine value of 30 to 60. Concrete examples of the palm fractionated oil with an iodine value of 10 to 70 include palm olein (a low melting point fraction obtained by fractionating palm oil), palm super olein (a low melting point fraction obtained by fractionating palm olein), palm stearin, hard palm stearin (a high melting point fraction obtained by fractionating palm stearin), a palm mid-fraction, and hard PMF. As for the palm fractionated oil, two or more types thereof can be used in combination.

The palm transesterified oil is one obtained by transesterifying palm oil or palm fractionated oil. The palm transesterified oil may be one obtained by transesterifying mixed oil of two or more types. The palm transesterified oil is preferably random transesterified oil of palm olein, and more preferably a random transesterified oil of palm olein with an iodine value of 50 to 60.

The palm extremely hydrogenated oil is one obtained by completely hydrogenating palm oil or palm fractionated oil. The palm extremely hydrogenated oil may be one obtained by completely hydrogenating mixed oil of two or more types. The palm extremely hydrogenated oil is preferably an extremely hydrogenated oil of palm oil.

A mix ratio of EBMF and palm-based oil and fat for obtaining the oil and fat composition of the present invention is, in terms of weight ratio (EBMF:palm-based oil and fat), preferably 99.5:0.5 to 15:85, more preferably 90:10 to 50:50, and still more preferably 80:20 to 60:40.

A fractionation method for obtaining the oil and fat composition of the present invention is particularly restricted, and can be carried out by a usual method such as dry fractionation (natural fractionation), emulsification fractionation (detergent fractionation), or solvent fractionation. The fractionation method for obtaining the oil and fat composition of the present invention is preferably dry fractionation or solvent fractionation. The dry fractionation can be in general carried out by cooling with stirring a raw material oil and fat to be fractionated in a bath to separate out crystals and then, followed by compression and/or filtration, thereby separating a high melting point fraction (referred to also as a hard fraction or crystalline fraction) and a low melting point fraction (referred to also as a soft fraction or liquid fraction). The solvent fractionation can be carried out dissolving a raw material oil and fat to be fractionated in a solvent such as acetone or hexane and cooling the solution to separate out crystals, followed by filtration, thereby separating a high melting point fraction and a low melting point fraction. Fractionation temperature varies in the properties of fractionated oil and fat that are required. The fractionation temperature of the dry fractionation is preferably 20 to 45°C, more preferably 23 to 43°C, and still more preferably 25 to 40°C. The fractionation temperature of the solvent fractionation is preferably -10 to 10°C, more preferably -8 to 8°C, and still more preferably -6 to 5°C.

Similarly to production of usual edible oil and fat, the oil and fat composition of the present invention can be subjected to purification treatment (deacidification, breaching, deodorization, or the like).

Even in cases where the diglyceride content of the oil and fat composition of the present invention is out of the above-mentioned range, the diglyceride content can be adjusted by reducing diglyceride so as to be within the above-mentioned range. Examples of methods of reducing diglyceride include silica gel treatment (stir treatment, column treatment) and enzyme treatment (lipase G treatment (hydrolysis, synthesis) and the like). Further, by using raw material oils obtained by reducing diglyceride via the silica gel treatment, enzyme treatment, or the like (for example, EBMF, palm-based oil and fat, or the like), the diglyceride content can be adjusted so as to be within the above-mentioned range.

The oil and fat composition of the present invention can be used, as hard butter (oil and fat for chocolates) or the like, in oil-based food products. Further, the oil and fat composition of the present invention can be used as non-tempering type hard butter. In particular, the oil and fat composition of the present invention can be used as non-tempering type hard butter that is a low trans fatty acid and is non-lauric type.

In cases where chocolates are produced by using the oil and fat composition of the present invention, the chocolate comes to have a good mold-releasing property. Thus, the oil and fat composition of the present invention can be suitably used as an oil and fat for chocolates molded using a mold.

The oil-based food product is produced by using the oil and fat composition of the present invention. It is to be noted that the oil-based food product refers to a processed food product containing an oil and fat, wherein the oil and fat is present as a continuous phase, and preferably contains sugar group. Concrete examples of the oil-based food product include chocolate and cream (such as butter cream).

The oil-based food product is preferably chocolate and is more preferably non-tempering type chocolates. The chocolate is not limited by the code "Fair Competition Codes concerning Labeling on Chocolates" (Japan Chocolate Industry Fair Trade Conference) or by definitions covered in laws and regulations, and refers to one produced by using edible fats and oils and sugar group as major raw materials; adding, as necessary, cacao components (cacao mass, cocoa powder, or the like), dairy products, flavoring agents, emulsifiers or the like; and subjecting them to the steps of chocolate production (mixing step, refining step, conching step, cooling step, and the like). Further, the chocolates also include white chocolate and colored chocolate, in addition to dark chocolate and milk chocolate.

In the oil-based food product, the content of the oil and fat composition of the present invention is (a blended amount), preferably 5 to 100% by weight, more preferably 40 to 100% by weight, and still more preferably 60 to 100% by weight in the oil and fat of the oil-based food product. Note that, in the present invention, the oil and fat of the oil-based food product also include, in addition to the blended oil and fat, oil and fat (cacao butter, milk fat or the like) in oil-containing raw materials (cacao mass, whole milk powder or the like).

The oil-based food product can be produced by a usual method. In cases where the oil-based food product is chocolate, it can be produced without carrying out tempering.

Besides the oil and fat composition of the present invention, food materials that are used in general oil-based food products including sugar group, cacao components, emulsifiers, dairy products, and flavoring agents can be blended in the oil-based food product.

In cases where the oil-based food product is chocolate, the chocolate is preferably a chocolate molded using a mold.

The oil-based food product can be, in the form of chocolate, combined with food products such as confectionery or bread.

The oil-based food product is low in the lauric acid content and trans fatty acid content in the constituent fatty acids of the oil and fat; and the productivity thereof is good.

Further, in cases where the oil-based food product is a chocolate molded using a mold, the chocolate exhibits a good mold-releasing property.

Further, the oil-based food product is chocolate, the chocolate has less seepage of oil and fat (so-called sweating phenomenon of chocolate). In chocolates made by using non-tempering type hard butter that is low trans fatty acid and non-lauric type, there is a tendency of relatively more seepage of oil and fat; but, according to the present invention, the chocolate comes to have less seepage of oil and fat.

Further, in cases where the oil-based food product is chocolate, the chocolate has a better heat resistance and melting feeling in the mouth.

### EXAMPLES

By way of the examples the present invention will now be described but the present invention is by no means limited thereto.

### (Methods of analysis)

A fatty acid content and trans fatty acid content were measured by methods in accordance with AOCS Ce1f-96.

An X3 triglyceride content, P3 triglyceride content, X2O triglyceride content, P2O triglyceride content, St2O triglyceride content, and PStO triglyceride content were measured by methods in accordance with JAOCS. vol.70, 11, 1111-1114 (1993).

An XOX triglyceride content was calculated based on an XOX/X2O ratio and X2O triglyceride content, wherein the value of XOX/X2O ratio was measured by a method in accordance with J. High Resol. Chromatogr., 18, 105-107 (1995).

A diglyceride content was measured by gas chromatography using an external standard method, wherein diglycerides were concentrated by a solid phase extraction method and then subjected to trimethylsilylation.

SFC was completely dissolved and then solidified at 10°C for 60 minutes, followed by further aging at 20°C for three days; and the resulting oil and fat was measured by a method in accordance with IUPAC method 2.150b-S Solid Content determination in Fats by NMR.

An iodine value was measured by a method in accordance with "2.3.4.1-1996 iodine value (Wijs-cyclohexane method)" in "Standard Methods for Analysis of Fats, Oils and Related Materials (edited by incorporated association Japan Oil Chemists' Society)".

### (Production of transesterified oil A1)

Twenty two parts by weight of high oleic sunflower oil (oleic acid content: 85.1% by weight, linoleic acid content: 6.6% by weight, linolenic acid content: 0.1% by weight), 31 parts by weight of palm stearin (iodine value: 36.1) and 47 parts by weight of extremely hydrogenated oil of soy bean oil (iodine value: 1.1, the content of saturated fatty acids having 16 carbon atoms or more: 99.5% by weight) were mixed. The obtained mixed oil (diglyceride content 1.61% by weight, lauric acid content 0.1% by weight, palmitic acid content 24.7% by weight, stearic acid 43.0% by weight, oleic acid 26.7% by weight, linoleic acid 3.8% by weight, linolenic acid 0.1% by weight, trans fatty acid 0% by weight) was subjected to a random transesterification reaction to obtain transesterified oil A1.

The transesterification reaction was carried out according to a conventional method, wherein a raw material oil and fat was sufficiently dried and sodium methoxide was added in 0.2% by weight based on the raw material oil and fat, the resultant was reacted while stirred under reduced pressure at 120 °C for 0.5 hours. The reaction was terminated by adding a 50% by weight aqueous citric acid solution for neutralization, and then washed with an equal amount of boiling hot water three times for dewatering and drying, followed by breaching and deodorization by a conventional method, thereby obtaining transesterified oil.

### (Production of transesterified oil A2)

Twenty seven point five parts by weight of the following oil and fat composition a (linoleic acid content: 6.9% by weight, linolenic acid content: 0% by weight), 34.5 parts by weight of palm stearin (iodine value: 36.1), and 38 parts by weight of extremely hydrogenated oil of soy bean oil (iodine value: 1.1, the content of saturated fatty acids having 16 carbon atoms or more: 99.5% by weight) were mixed. The obtained mixed oil (diglyceride content 4.32% by weight, lauric acid content 0.1% by weight, palmitic acid content 24.8% by weight, stearic acid 43.9% by weight, oleic acid 25.6% by weight, linoleic acid 4.1% by weight, linolenic acid 0.1% by weight, trans fatty acid 0% by weight) was subjected to a random transesterification reaction to obtain transesterified oil A2.

The transesterification reaction was carried out by the same method as described for the above transesterified oil A1.

### (Production of transesterified oil B)

Sixty parts by weight of palm stearin (iodine value: 36.1) and 40 parts by weight of palm oil (iodine value: 52.0) were mixed. The obtained mixed oil (diglyceride content 3.74% by weight, lauric acid content 0.2% by weight, palmitic acid content 51.7% by weight, stearic acid 4.6% by weight, oleic acid 33.2% by weight, linoleic acid 8.0% by weight, linolenic acid 0.2% by weight, trans fatty acid 0% by weight) was subjected to a random transesterification reaction to obtain transesterified oil B.

The transesterification reaction was carried out by the same method as described for the above transesterified oil A1.

### (Production of transesterified oil C)

Palm olein (iodine value: 56.1) was subjected to a random transesterification reaction to obtain transesterified oil C.

The transesterification reaction was carried out by the same method as described for the above transesterified oil A1.

### (Production of transesterified oil D)

To transesterified oil C, water 10% by weight and lipase (lipase G "Amano" 50; manufactured by Amano Enzyme Inc.) 0.1% by weight were added and stirred at 43°C for 6 hours for reaction. After the lipase treatment, the resultant was washed three times with the same amount of hot water (80°C) as that of the oil and fat to obtain reacted oil. One obtained by subjecting the obtained reacted oil to breaching and deodorization by a conventional method was designated as transesterified oil D.

### (Production of transesterified oil E)

Thirty parts by weight of extremely hydrogenated oil of canola oil and 70 parts by weight of palm olein (iodine value: 56.1) were mixed. The obtained mixed oil was subjected to a random transesterification reaction to obtain transesterified oil E.

The transesterification reaction was carried out by the same method as described for the above transesterified oil A1.

### (Production of oil and fat composition a)

An oil and fat obtained by subjecting transesterified oil of high oleic sunflower oil and ethyl stearate to dry fractionation was designated as an oil and fat composition a.

### (Production of oil and fat composition of Example 1)

The transesterified oil C was subjected to dry fractionation at 26°C and a high melting point fraction was removed, thereby obtaining a low melting point fraction. The obtained low melting point fraction was subjected to solvent fractionation at 2°C and a low melting point fraction was removed, thereby obtaining a high melting point fraction. The obtained high melting point fraction was subjected to breaching and deodorization by a conventional method; and 82 parts by weight of the high melting point fraction, 12 parts by weight of hard palm stearin (iodine value: 11.0), and 6 parts by weight of canola oil were mixed to obtain an oil and fat composition of Example 1.

### (Production of oil and fat composition of Example 2)

Forty parts by weight of transesterified oil A1 and 60 parts by weight of transesterified oil B were mixed. The obtained mixed oil was subjected to dry fractionation at 37.8°C and a high melting point fraction was removed, thereby obtaining a low melting point fraction. The obtained low melting point fraction was subjected to solvent fractionation (using acetone) at 0°C and a low melting point fraction was removed, thereby obtaining a high melting point fraction. The obtained high melting point fraction was subjected to breaching and deodorization by a conventional method; and the resultant was designated as an oil and fat composition of Example 2.

### (Production of oil and fat composition of Example 3)

To oil and fat composition of Example 2, water 10% by weight and lipase (lipase G "Amano" 50; manufactured by Amano Enzyme Inc.) 0.1% by weight were added and stirred at 43°C for 6 hours for reaction. After the lipase treatment, the resultant was washed three times with the same amount of hot water (80°C) as that of the oil and fat to obtain reacted oil. To the obtained reacted oil, white clay 1% by weight was added and stirred at 110°C and 500 Pa for 30 minutes, followed by filtration of the white clay, thereby obtaining breached oil. The breached oil was subjected to deodorization for 90 minutes while blown with steam at 240°C and 500 Pa; and the resultant was designated as an oil and fat composition of Example 3.

### (Production of oil and fat composition of Example 4)

Ninety eight point five parts by weight of the oil and fat composition of Example 2 and 1.5 parts by weight of extremely hydrogenated oil of palm oil were mixed; and the resultant was designated as an oil and fat composition of Example 4.

### (Production of oil and fat composition of Example 5)

Ninety eight point five parts by weight of the oil and fat composition of Example 3 and 1.5 parts by weight of extremely hydrogenated oil of palm oil were mixed; and the resultant was designated as an oil and fat composition of Example 5.

### (Production of oil and fat composition of Example 6)

Seventy five parts by weight of the oil and fat composition of Example 2 and 25 parts by weight of transesterified oil C were mixed; and the resultant was designated as an oil and fat composition of Example 6.

### (Production of oil and fat composition of Example 7)

Seventy five parts by weight of the oil and fat composition of Example 2 and 25 parts by weight of transesterified oil D were mixed; and the resultant was designated as an oil and fat composition of Example 7.

### (Production of oil and fat composition of Example 8)

Seventy five parts by weight of the oil and fat composition of Example 3 and 25 parts by weight of transesterified oil C were mixed; and the resultant was designated as an oil and fat composition of Example 8.

### (Production of oil and fat composition of Example 9)

Seventy five parts by weight of the oil and fat composition of Example 3 and 25 parts by weight of transesterified oil D were mixed; and the resultant was designated as an oil and fat composition of Example 9.

### (Production of oil and fat composition of Example 10)

Seventy five parts by weight of the oil and fat composition of Example 3 and 25 parts by weight of palm olein (iodine value: 56.1) were mixed; and the resultant was designated as an oil and fat composition of Example 10.

### (Production of oil and fat composition of Example 11)

Seventy parts by weight of the oil and fat composition of Example 3 and 30 parts by weight of a palm mid-fraction (iodine value: 45.5) were mixed; and the resultant was designated as an oil and fat composition of Example 11.

### (Production of oil and fat composition of Example 12)

Nineteen point two parts by weight of oil and fat composition of Example 2, 4 parts by weight of hard palm stearin (iodine value: 11.0), 36.8 parts by weight of transesterified oil C, and 40 parts by weight of hard PMF (iodine value: 34.1) were mixed; and the resultant was designated as an oil and fat composition of Example 12.

### (Production of oil and fat composition of Comparative Example 1)

Forty parts by weight of transesterified oil E and 60 parts by weight of hard PMF (iodine value: 34.1) were mixed; and the resultant was designated as an oil and fat composition of Comparative Example 1.

### (Production of oil and fat composition of Comparative Example 2)

Forty parts by weight of transesterified oil A2 and 60 parts by weight of transesterified oil B were mixed. The obtained mixed oil was subjected to dry fractionation at 37.8°C and a high melting point fraction was removed, thereby obtaining a low melting point fraction. The obtained low melting point fraction was subjected to solvent fractionation (using acetone) at 0°C and a low melting point fraction was removed, thereby obtaining a high melting point fraction. The obtained high melting point fraction was subjected to breaching and deodorization by a conventional method; and the resultant was designated as an oil and fat composition of Comparative Example 2.

### (Production of oil and fat composition of Example 13)

To the oil and fat composition of Comparative Example 2, silica gel (Wakogel C-200; manufactured by Wako Pure Chemical Industries, Ltd.) 5% by weight was added and stirred at 80°C under reduced pressure for 30 minutes. The silica gel was then removed by filtration; and the resultant was designated as an oil and fat composition of Example 13.

### (Production of oil and fat composition of Reference Example 14)

Silica gel (Wakogel C-200; manufactured by Wako Pure Chemical Industries, Ltd.), the volume of which was 20 times as much as that of the oil and fat composition of Comparative Example 2, was swollen in hexane and then filled to prepare a silica gel column. A hexane solution of the oil and fat composition of Comparative Example 2 was loaded thereinto; and subsequently the solvent was changed to hexane:ethyl acetate= 30:1 to obtain an eluate. The solvent of the obtained eluate was evaporated under reduced pressure; and the resultant was designated as an oil and fat composition of Reference Example 14.

### (Production of oil and fat composition of Example 15)

Eighteen parts by weight of the oil and fat composition of Example 2, 52 parts by weight of oil and fat composition of Example 3, and 30 parts by weight of palm mid-fraction (iodine value: 45.5) were mixed; and the resultant was designated as an oil and fat composition of Example 15.

### (Production of oil and fat composition of Example 16)

Fifty four parts by weight of the oil and fat composition of Example 2, 16 parts by weight of oil and fat composition of Example 3, and 30 parts by weight of palm mid-fraction (iodine value: 45.5) were mixed; and the resultant was designated as an oil and fat composition of Example 16.

### (Production of oil and fat composition of Example 17)

Seventy parts by weight of the oil and fat composition of Example 2 and 30 parts by weight of a palm mid-fraction (iodine value: 45.5) were mixed; and the resultant was designated as an oil and fat composition of Example 17.

### (Analysis of oil and fat compositions of Examples and Comparative Examples)

For the oil and fat compositions of Examples 1 to 17 and oil and fat compositions of Comparative Examples 1 and 2, the fatty acid content, triglyceride content, and SFC were measured according to the methods of analysis that were described earlier. The results are shown in Tables 1 to 4.

As can be seen from Tables 1 to 4, the oil and fat compositions of Examples and Comparative Examples were low in the lauric acid content and trans fatty acid content.

### (Production of chocolates)

Using the oil and fat compositions of Examples 1 to 17 and oil and fat compositions of Comparative Examples 1 and 2, non-tempering type milk chocolates (the blending amount of each oil and fat composition in the oil and fat: 74.0% by weight) were produced in accordance with the blend composition in Table 5. The milk chocolate was produced by a conventional method (mixing, refining, conching, cooling) except that tempering was not carried out.

### (Evaluation of chocolate's mold-releasing property)

The milk chocolate produced above was melted; and 120 g thereof was filled in a mold made of polycarbonate and molded by being placed in a refrigerator at 7°C. It is to be noted that the mold made of polycarbonate that was used for the molding has a grid on the bottom surface thereof. The total number of the grid squares of the grid is 30 (5×6) grid squares. Starting from five minutes after the beginning of the cooling, the number of the grid squares where the chocolate peeled off was visually counted every five minutes; and the mold-releasing percentage of the molded chocolate was calculated by the mathematical formula below. A period of time when the mold-releasing percentage reached not less than 90% was measured. The results are shown Tables 1 to 4. The mold-releasing property gives an indication of the productivity of the chocolate. In cases where a period of time when the mold-releasing percentage reached not less than 90% was not more than 25 minutes, chocolate's mold-releasing property (mold separation) was considered to be good and the productivity of the chocolate was judged to be good.

Mold-releasing percentage (%) = the number of the grid squares where the chocolate peeled off / the total number of the grid squares × 100

**[Table 1]**

| Table 1 | The triglyceride content, diglyceride content, and fatty acid content (% by weight) of oil and fat compositions; the triglyceride weight ratio and fatty acid weight ratio of the oil and fat composition; SFC (%) of the oil and fat composition; and results of the evaluation of the mold-releasing property of chocolates | | | | | |
|---|---|---|---|---|---|---|
| | | Example 1 | Example 2 | Example 3 | Example 4 | Example 5 |
| X3 content | | 12.0 | 12.3 | 12.1 | 13.4 | 13.4 |
| X2O content | | 65.6 | 68.3 | 68.7 | 67.7 | 67.5 |
| XOX/X2O weight ratio | | 0.410 | 0.350 | 0.350 | 0.350 | 0.350 |
| DAG content | | 0.4 | 2.9 | 0.2 | 2.9 | 0.3 |
| P3 content | | 10.0 | 7.0 | 6.9 | 6.9 | 7.0 |
| P3/X3 weight ratio | | 0.833 | 0.569 | 0.570 | 0.515 | 0.522 |
| XOX content | | 26.9 | 23.9 | 24.0 | 23.7 | 23.6 |
| P2O content | | 51.7 | 35.5 | 35.8 | 35.2 | 35.0 |
| PStO content | | 10.5 | 18.9 | 19.1 | 18.8 | 18.8 |
| PStO/X2O weight ratio | | 0.160 | 0.277 | 0.278 | 0.278 | 0.279 |
| St2O content | | 1.3 | 11.9 | 11.9 | 11.7 | 11.7 |
| St2O/X2O weight ratio | | 0.020 | 0.174 | 0.173 | 0.173 | 0.173 |
| La content | | 0.2 | 0.1 | 0.2 | 0.1 | 0.2 |
| P content | | 58.8 | 46.1 | 45.4 | 46.0 | 45.3 |
| St content | | 5.8 | 20.4 | 20.0 | 20.9 | 20.4 |
| St/P weight ratio | | 0.099 | 0.443 | 0.440 | 0.453 | 0.451 |
| Content of FA with C16 or more | | 98.9 | 99.1 | 98.9 | 99.0 | 98.8 |
| TFA content | | 0.3 | 0.1 | 0.3 | 0.1 | 0.3 |
| SFC | 25°C | 81.2 | 84.4 | 87.7 | 85.9 | 87.6 |
| | 30°C | 63.4 | 43.8 | 41.6 | 46.4 | 45.5 |
| | 35°C | 25.3 | 20.3 | 19.3 | 22.9 | 22.4 |
| Mold-releasing property (min) | | 20 | 25 | 15 | 25 | 15 |

**[Table 2]**

| Table 2 | The triglyceride content, diglyceride content, and fatty acid content (% by weight) of oil and fat compositions; the triglyceride weight ratio and fatty acid weight ratio of the oil and fat composition; SFC (%) of the oil and fat composition; and results of the evaluation of the mold-releasing property of chocolates | | | | | |
|---|---|---|---|---|---|---|
| | | Example 6 | Example 7 | Example 8 | Example 9 | Example 10 |
| X3 content | | 11.9 | 12.0 | 11.8 | 11.4 | 9.5 |
| X2O content | | 58.6 | 58.0 | 58.9 | 57.9 | 61.5 |
| XOX/X2O weight ratio | | 0.340 | 0.340 | 0.330 | 0.350 | 0.430 |
| DAG content | | 3.4 | 2.3 | 1.6 | 0.3 | 1.4 |
| P3 content | | 7.2 | 7.3 | 7.1 | 6.8 | 5.4 |
| P3/X3 weight ratio | | 0.605 | 0.608 | 0.602 | 0.596 | 0.568 |
| XOX content | | 19.9 | 19.7 | 19.4 | 20.3 | 26.4 |
| P2O content | | 32.5 | 32.3 | 32.5 | 31.3 | 34.9 |
| PStO content | | 15.6 | 15.5 | 15.8 | 15.7 | 16.1 |
| PStO/X20 weight ratio | | 0.266 | 0.267 | 0.268 | 0.271 | 0.262 |
| St2O content | | 9.3 | 9.1 | 9.4 | 9.8 | 9.3 |
| St2O/X2O weight ratio | | 0.159 | 0.157 | 0.160 | 0.169 | 0.151 |
| La content | | 0.1 | 0.1 | 0.2 | 0.2 | 0.2 |
| P content | | 44.2 | 44.8 | 43.7 | 44.3 | 43.6 |
| St content | | 16.3 | 16.4 | 16.0 | 16.1 | 16.0 |
| St/P weight ratio | | 0.369 | 0.365 | 0.366 | 0.362 | 0.366 |
| Content of FA with C16 or more | | 97.4 | 99.0 | 97.2 | 98.8 | 97.4 |
| TFA content | | 0.2 | 0.3 | 0.4 | 0.4 | 0.4 |
| SFC | 25°C | 58.6 | 60.1 | 59.8 | 61.7 | 58.2 |
| | 30°C | 33.4 | 34.3 | 31.6 | 33.2 | 27.9 |
| | 35°C | 15.9 | 16.5 | 15.2 | 15.7 | 11.3 |
| Mold-releasing property (min) | | 25 | 20 | 15 | 15 | 15 |

**[Table 3]**

| Table 3 | The evaluation of the triglyceride content, diglyceride content, and fatty acid content (% by weight) of oil and fat compositions; the triglyceride weight ratio and fatty acid weight ratio of the oil and fat composition; SFC (%) of the oil and fat composition; and results of the evaluation of the mold-releasing property of chocolates | | | | | |
|---|---|---|---|---|---|---|
| | | Example 11 | Example 12 | Comparative Example 1 | Comparative Example 2 | Example 13 |
| X3 content | | 9.1 | 10.2 | 9.9 | 12.2 | 12.5 |
| X2O content | | 65.9 | 59.2 | 68.3 | 70.0 | 70.4 |
| XOX/X2O weight ratio | | 0.510 | 0.721 | 0.840 | 0.330 | 0.330 |
| DAG content | | 1.0 | 3.2 | 5.3 | 3.6 | 1.6 |
| P3 content | | 5.3 | 7.5 | 2.1 | 7.4 | 7.5 |
| P3/X3 weight ratio | | 0.582 | 0.735 | 0.212 | 0.607 | 0.600 |
| XOX content | | 33.6 | 42.7 | 57.4 | 23.1 | 23.2 |
| P2O content | | 39.7 | 43.2 | 47.4 | 35.7 | 35.9 |
| PStO content | | 16.2 | 10.8 | 14.6 | 20.1 | 20.2 |
| PStO/X2O weight ratio | | 0.246 | 0.182 | 0.214 | 0.287 | 0.287 |
| St2O content | | 8.7 | 3.4 | 4.6 | 12.2 | 12.5 |
| St2O/X2O weight ratio | | 0.132 | 0.057 | 0.067 | 0.174 | 0.178 |
| La content | | 0.2 | 0.2 | 0.1 | 0.2 | 0.3 |
| P content | | 45.6 | 49.8 | 45.7 | 45.1 | 41.0 |
| St content | | 15.4 | 8.1 | 16.2 | 21.7 | 4.3 |
| St/P weight ratio | | 0.338 | 0.162 | 0.356 | 0.480 | 0.105 |
| Content of FA with C16 or more | | 97.4 | 98.8 | 99.1 | 98.8 | 98.7 |
| TFA content | | 0.3 | 0.3 | 0.3 | 0.4 | 0.8 |
| SFC | 25°C | 64.0 | 49.8 | 57.2 | 87.2 | 87.3 |
| | 30°C | 29.5 | 23.5 | 23.9 | 46.0 | 45.9 |
| | 35°C | 11.6 | 10.8 | 11.6 | 20.8 | 22.0 |
| Mold-releasing property (min) | | 20 | 25 | 45 | 40 | 25 |

**[Table 4]**

| Table 4 | The triglyceride content, diglyceride content, and fatty acid content (% by weight) of oil and fat compositions; the triglyceride weight ratio and fatty acid weight ratio of the oil and fat composition; SFC (%) of the oil and fat composition; and results of the evaluation of the mold-releasing property of chocolates | | | | |
|---|---|---|---|---|---|
| | | Reference Example 14 | Example 15 | Example 16 | Example 17 |
| X3 content | | 12.0 | 9.1 | 9.1 | 9.1 |
| X2O content | | 70.7 | 65.9 | 65.9 | 65.9 |
| XOX/X2O weight ratio | | 0.330 | 0.510 | 0.510 | 0.510 |
| DAG content | | 0 | 1.5 | 2.5 | 3.0 |
| P3 content | | 7.4 | 5.3 | 5.3 | 5.3 |
| P3/X3 weight ratio | | 0.617 | 0.582 | 0.582 | 0.582 |
| XOX content | | 23.3 | 33.6 | 33.6 | 33.6 |
| P2O content | | 36.4 | 40.0 | 40.0 | 40.1 |
| PStO content | | 19.9 | 16.2 | 16.1 | 16.1 |
| PStO/X2O weight ratio | | 0.281 | 0.246 | 0.244 | 0.244 |
| St2O content | | 12.3 | 8.6 | 8.6 | 8.6 |
| St2O/X2O weight ratio | | 0.174 | 0.131 | 0.131 | 0.131 |
| La content | | 0.1 | 0.2 | 0.1 | 0.1 |
| P content | | 45.9 | 45.7 | 46.0 | 46.1 |
| St content | | 21.6 | 15.5 | 15.6 | 15.7 |
| St/P weight ratio | | 0.469 | 0.338 | 0.340 | 0.341 |
| Content of FA with C16 or more | | 98.9 | 97.4 | 97.5 | 97.5 |
| TFA content | | 0.5 | 0.3 | 0.2 | 0.2 |
| SFC | 25°C | 88.0 | 63.2 | 61.2 | 60.5 |
| | 30°C | 45.9 | 28.3 | 27.2 | 27.4 |
| | 35°C | 21.8 | 11.3 | 11.8 | 11.9 |
| Mold-releasing property (min) | | 15 | 20 | 25 | 25 |

**[Table 5]**

| Table 5 Blend composition of milk chocolate (% by weight) | |
|---|---|
| Oil and fat composition | 29.2 |
| Sugar | 43.5 |
| Cacao mass | 17.8 |
| Whole milk powder | 9.0 |
| Lecithin | 0.5 |

As can be seen from Tables 1 to 4, the non-tempering type chocolates produced by using the oil and fat compositions of Examples 1 to 17 exhibited a good mold-releasing property.

On the other hand, as can be seen from Table 3, the non-tempering type chocolates produced by using the oil and fat compositions of Comparative Example 1 and 2 exhibited a poor mold-releasing property.

### (Evaluation of chocolate's sweating, heat resistance, and melting feeling in the mouth)

For the chocolates of Examples 6 to 9 and Comparative Examples 1 and 2 which were molded above, evaluations of sweating (seepage of oil and fat), heat resistance, and melting feeling in the mouth were carried out according to the following standards. The results of the evaluation are shown in Table 6.

### (1) Evaluation of sweating

The milk chocolate produced above was melted; and 5 g thereof was filled into a mold made of polycarbonate and placed in a refrigerator at 7°C to cool and solidify. The milk chocolate was then released out of the mold. This obtained chocolate was subjected to aging at 20°C for one week and then left to stand in an incubator at 29°C for two hours. Sweating on the surface thereof was monitored. The sweating was evaluated according to the following criteria.
⊚: No sweating was seen.
○: Some sweating was seen but disappeared within one hour; and no sweat marks were left.
× : Sweating was seen and sweat marks were left even after the sweating disappeared.

### (2) Evaluation of heat resistance

The evaluation was carried out using chocolates molded in the same conditions as described in the above evaluation of sweating. The evaluation of heat resistance was carried out by evaluating a state of fingerprints being left on the surface of chocolate when the surface of chocolate was touched by the pad of the index finger. The heat resistance was evaluated according to the following criteria.
⊚: The surface of chocolate was hard and no fingerprints were left.
○: The surface of chocolate was hard and fingerprints were hardly left.
× : The surface of chocolate was soft and fingerprints were left.

### (3) Evaluation of melting feeling in the mouth

The evaluation was carried out using chocolates molded in the same conditions as described in the above evaluation of sweating. The chocolate was eaten and the melting feeling in the mouth of the chocolate was evaluated according to the following criteria.
⊚: The melting feeling in the mouth was good and no lingering taste was noted.
○: The melting feeling in the mouth was good and little lingering taste was noted.
× : The melting feeling in the mouth was poor and a lingering taste was noted to a large degree.

**[Table 6]**

| Table 6 | Results of the evaluation of chocolate's sweating, heat resistance, and melting feeling in the mouth | | | | | |
|---|---|---|---|---|---|---|
| | Example 6 | Example 7 | Example 8 | Example 9 | Comparative Example 1 | Comparative Example 2 |
| Sweating | ○ | ○ | ⊚ | ⊚ | × | × |
| Heat resistance | ○ | ○ | ⊚ | ⊚ | × | ○ |
| Melting feeling in the mouth | ○ | ○ | ⊚ | ⊚ | × | ○ |

As can be seen in Table 6, the non-tempering type chocolates produced by using the oil and fat compositions of Examples 6 to 9 showed no sweating or were not affected by the sweating, and had a good heat resistance and melting feeling in the mouth.

On the other hand, as can be seen in Table 6, the non-tempering type chocolate produced by using the oil and fat composition of Comparative Example 1 was affected by the sweating and had a poor heat resistance and melting feeling in the mouth. Further, the non-tempering type chocolate produced by using the oil and fat composition of Comparative Example 2 had a good heat resistance and melting feeling in the mouth but was affected by the sweating.

## Claims

1. An oil and fat composition satisfying the following conditions of (a) to (d):
(a) an X3 content is 1 to 20% by weight;
(b) an X2O content is 50 to 90% by weight;
(c) a weight ratio of XOX/X2O is 0.20 to 0.80;
(d) a diglyceride content is 0.2% to 3.5% by weight;
(in the above conditions of (a) to (d), each of X, O, X3, X2O, and XOX represents the following:
X: saturated fatty acid having 14 carbon atoms or more;
O: oleic acid;
X3: triglyceride in which three molecules of X are bound;
X2O: triglyceride in which two molecules of X and one molecule of O are bound;and
XOX: triglyceride in which X is bound at positions 1 and 3 and O is bound at position 2).

2. The oil and fat composition according to claim 1, wherein a lauric acid content in the constituent fatty acids is not more than 5% by weight and a trans fatty acid content is not more than 5% by weight.

3. The oil and fat composition according to claim 1 or claim 2, wherein said oil and fat composition is non-tempering type hard butter.

## Patentansprüche

1. Öl- und Fettzusammensetzung, den folgenden Bedingungen (a) bis (d) genügend:
(a) ein X3 Gehalt beträgt 1 bis 20 Gewichts-%;
(b) ein X2O Gehalt beträgt 50 bis 90 Gewichts-%;
(c) ein Gewichtsverhältnis XOX/X2O beträgt 0,20 bis 0,80;
(d) ein Diglyceridgehalt beträgt 0,2 Gewichts-% bis 3,5 Gewichts-%;
(in den vorstehenden Bedingungen (a) bis (d) bedeutet jedes von X, O, X3, X2O und XOX das Folgende:
X: gesättigte Fettsäure mit 14 Kohlenstoffatomen oder mehr;
O: Oleinsäure;
X3: Triglycerid, in welchem drei Moleküle X gebunden sind;
X2O: Triglycerid, in welchem zwei Moleküle X und ein Molekül O gebunden sind;
XOX: Triglycerid, in welchem X an Positionen 1 und 3 gebunden ist und O an Position 2 gebunden ist).

2. Öl- und Fettzusammensetzung nach Anspruch 1, wobei ein Laurinsäuregehalt in den Bestandteilsfettsäuren nicht mehr als 5 Gewichts-% beträgt und ein Transfettsäuregehalt nicht mehr als 5 Gewichts-% beträgt.

3. Öl- und Fettzusammensetzung nach Anspruch 1 oder Anspruch 2, wobei die Öl- und Fettzusammensetzung Hartbutter des nicht-temperierenden Typs umfasst.

## Revendications

1. Composition d'huile et de graisse, satisfaisant les conditions (a) à (d) suivantes :
(a) la teneur en X3 se situe dans l'intervalle allant de 1 à 20% en poids ;
(b) la teneur en X2O se situe dans l'intervalle allant de 50 à 90% en poids ;
(c) le rapport pondéral XOX/X2O se situe dans l'intervalle allant de 0,20 à 0,80 ;
(d) la teneur en diglycéride se situe dans l'intervalle allant de 0,2% à 3,5% en poids ;
(dans les conditions (a) à (d) ci-dessus, les X, O, X3, X2O et XOX ont la signification suivante :
X : acide gras saturé ayant 14 atomes de carbone ou plus ;
O : acide oléique ;
X3 : triglycéride dans lequel trois molécules de X sont liées ;
X2O : triglycéride dans lequel deux molécules de X et une molécule de O sont liées ; et
XOX : triglycéride dans lequel X est lié en les positions 1 et 3 et O est lié en la position 2).

2. Composition d'huile et de graisse selon la revendication 1, dans laquelle la teneur en acide laurique dans la partie acide gras est non supérieure à 5% en poids et la teneur en acide gras trans est non supérieure à 5% en poids.

3. Composition d'huile et de graisse selon la revendication 1 ou la revendication 2, dans laquelle ladite composition d'huile et de graisse est un beurre dur de type non tempéré.
